# EUROPÄISCHE PATENTSCHRIFT

(11) **EP 0 680 817 B1**
(45) Veröffentlichungstag und Bekanntmachung des Hinweises auf die Patenterteilung: **15.07.1998**
(21) Anmeldenummer: 95103839.7
(22) Anmeldetag: 16.03.1995
(51) Int. Cl.: B29C 65/48, B29C 65/52, F16B 3/00, F16C 13/00

(54) **Verfahren zur Erhöhung der Querbelastbarkeit von mechanischen Verbindungen**
Method for increasing the shear loading capacity of mechanical connections
Procédé pour augmenter la tenue de liaisons mécaniques aux efforts de cisaillement

(30) Priorität: 03.05.1994 DE 4415526
(43) Veröffentlichungstag der Anmeldung: 08.11.1995
(73) Patentinhaber: Voith Sulzer Papiermaschinen GmbH, 89509 Heidenheim (DE)
(72) Erfinder: Link, Christoph, D-88250 Weingarten (DE)
(74) Vertreter: Knoblauch, Ulrich, Dr.-Ing.

(56) Entgegenhaltungen:
- EP-A- 0 390 685
- DE-A- 1 704 258
- DE-A- 2 101 833
- DE-A- 3 638 179
- DE-A- 4 322 724
- FR-A- 1 164 445
- US-A- 3 372 007

## Beschreibung

Die Erfindung betrifft ein Verfahren zur Erhöhung der Querbelastbarkeit der mechanischen Verbindung zwischen einem vorwiegend aus Kunststoff bestehenden Walzenmantel und einer, der Verbindung zum Antrieb dienenden, aus hartem Material, vorzugsweise Metall, bestehenden, seitlichen Abdeckung mit sich berührenden Verbindungsflächen.

Bei einem in der nicht-vorveröffentlichten DE-Patentanmeldung 43 22 724.4 beschriebenen Verfahren werden gegenüberliegende Aussparungen in den Verbindungsflächen von Walzenmantel und Abdeckung über Kanäle mit einem Kunststoff ausgegossen. Dies ermöglicht es, Querkräfte, die in Folge des vom Drehantrieb des Trägers ausgehenden und auf den Walzenmantel zu übertragenden Drehmoments zwischen der Abdeckung und dem Walzenmantel auftreten, zu erhöhen. Diese Lösung ist aber wegen der erforderlichen Kanäle noch nicht vollkommen befriedigend. Zwar kann man die Querbelastbarkeit auch durch eine entsprechende Gestaltung der Verbindungsflächen oder durch eine Erhöhung der Anzahl von Verbindungselementen erhöhen, was allerdings die Herstellungskosten erheblich steigert. Dies gilt insbesondere beim Anbringen von Keilen oder paßgenauen Stiften.

Aus FR-A-1 164 445 ist es bekannt, zwei Teile, insbesondere Möbel- oder Bauwerks-Teile dadurch zu verbinden, daß das eine Teile mit einem Gewindebolzen und das andere Teil mit einer Aussparung versehen wird, in die ein Kunststoff eingegossen und das freie Ende des Gewindebolzens eingeführt wird.

Aus EP-A-0 390 685 ist es bekannt, zwei Teile aus faserverstärktem Kunststoff, insbesondere großflächige Teile auf dem Gebiet des Flugzeugbaus und der Raumfahrt, dadurch zu verbinden, daß man zunächst die Verstärkungstextilien beider Teile mit Löchern versieht und in jeweils zwei miteinander ausgerichtete Löcher einen komprimierten Dübel aus Fasermaterial einführt, der sich durch Entspannen der Lochwand anpaßt und dadurch eine Verriegelung bewirkt. Alsdann wird das so verbundene Fasermaterial mit dem Basiskunststoff versehen, beispielsweise durch Infiltration des dampfförmigen Materials in die Porenstruktur der Fasertextilie.

Der Erfindung liegt die Aufgabe zugrunde, ein Verfahren zur Gewährleistung einer ausreichenden Querbelastbarkeit der mechanischen Verbindung zwischen einem Walzenmantel und einer seitlichen Abdeckung zu schaffen, das mit geringem Herstellungsaufwand verbunden ist und größere Toleranzen erlaubt.

Erfindungsgemäß ist diese Aufgabe durch die in den Ansprüchen 1, 2 und 3 beschriebenen Verfahren gelöst, wobei die Unteransprüche besondere Ausführungsformen darstellen.

Allen Lösungen ist gemeinsam, daß die Aussparungen keine Kanäle aufweisen müssen, was sich positiv auf den Herstellungsaufwand auswirkt, da das Material bzw. dessen Komponenten bereits vor dem Herstellen der Verbindung in die Aussparung gefüllt werden.

Bei der dritten Variante ist es von Vorteil, wenn das Element aus einem harten Material, wie beispielsweise Metall, besteht. Weiter ist es günstig, daß das Element in die aus hartem Material bestehende Abdeckung gesteckt oder geschraubt wird. Einerseits erhöht das Element die Querbelastbarkeit, andererseits gewährleistet das das Element innerhalb der Aussparung umgebende Material eine ausreichende Nachgiebigkeit und damit eine Schonung des aus weichem Material bestehenden Walzenmantels. Für die Schaffung einer Verbindung zum aufgefüllten Material empfiehlt es sich, wenn die Elemente an dem in die Aussparung ragenden Ende zumindest eine Verdickung aufweisen.

Bei allen Verfahrensvarianten sind verschiedene Gestaltungsformen der Aussparungen je nach Anwendungsfall sowie der zu erwartenden Belastungsrichtung und - stärke möglich. Außerdem kann durch die entsprechende Formgebung auch eine örtliche Schwächung und damit eine Sollbruchstelle geschaffen werden. Insbesondere dann, wenn die Verbindung leicht lösbar sein soll, ist es vorteilhaft, wenn die Aussparungen die Form eines senkrecht zur Verbindungsfläche angeordneten Zylinders oder Konusses haben, dessen Querschnittsfläche sich zur Verbindungsfläche hin vergrößert. Es ist natürlich auch möglich, daß sich bei jeweils einem der beiden gegenüberliegenden Aussparungen die Querschnittsfläche zur Verbindungsfläche hin verkleinert, wodurch das aufgefüllte und ausgehärtete Materialteil beim Lösen der Verbindung in diesem Teil festgehalten wird oder daß sich bei beiden Aussparungen die Querschnittsfläche zur Verbindungsfläche hin verkleinert, wodurch eine nicht lösbare Verbindung entsteht.

Für die Lösbarkeit der Verbindungen ist es von Vorteil, zumindest einen Teil der Aussparungen vor dem Ausfüllen mit einem Trennmittel zu benetzen.

Die ausgehärteten Materialteile können auch zur Positionierung bei einer Wiedermontage verwendet werden.

Die Belastbarkeit des Materials kann wesentlich durch Beimengungen aus Fasern, Metallteilen o.ä. vergrößert oder aber durch entsprechende Materialien beispielsweise zur Bildung einer Sollbruchstelle verkleinert werden. Es kann dabei erforderlich sein, daß diese Stoffe, bzw. Teile schon vor dem Verbinden in die Aussparungen eingebracht werden.

Zur Beeinflussung der Aushärtung des Materials ist es beispielsweise denkbar, eines der zu verbindenden Teile zu beheizen, eventuell vorhandene metallische Beimengungen des Materials auf elektromagnetischem Wege zu erwärmen oder durch Vibration zumindest eines Teiles eine schnelle Vermischung der Materialkomponenten zu erreichen.

Nachfolgend soll die Erfindung an mehreren Ausführungsbeispielen näher erläutert werden. In der beigefügten Zeichnung zeigen:
- Fig. 1: Teilschnitte einer Walze und
- Fig. 2-4: Gestaltungsformen einer Verstärkung der Querbelastbarkeit.

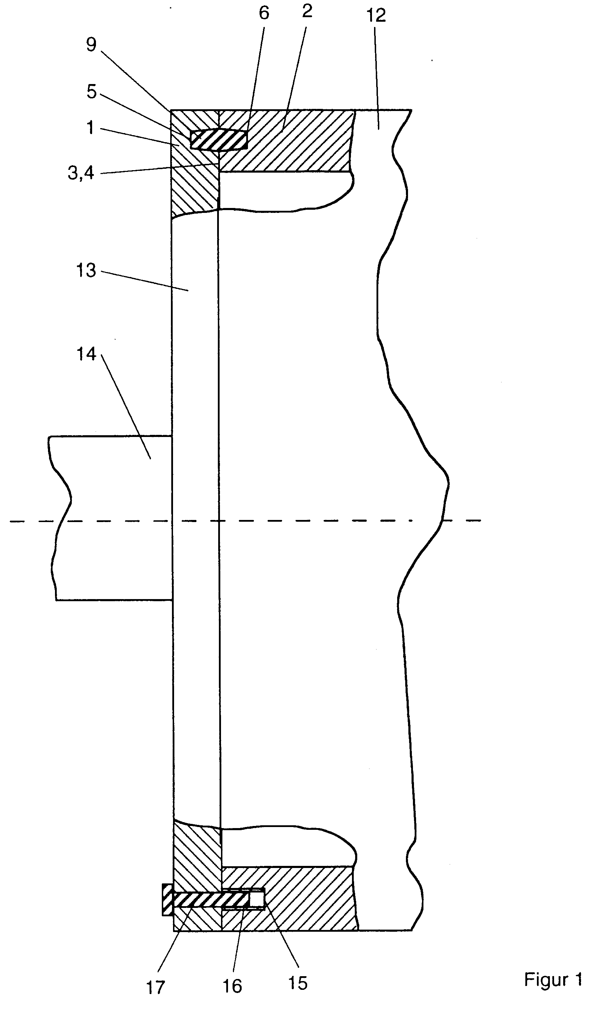

Die in Fig. 1 dargestellte Walze besteht im wesentlichen aus einem Träger 14, einer seitlichen Abdeckung 13 aus Metall und einem Walzenmantel 12 aus einem flexiblen Kunststoff. Die Verbindung zwischen der Abdeckung 13 und dem Walzenmantel 12 erfolgt auch hier üblicherweise über Schrauben 17 und entsprechende in einer Bohrung 15 des Walzenmantels 12 befestigte Gewindeeinsätze 16. Um ein ausreichendes Drehmoment vom Träger 14 bzw. der Abdeckung 13 auf den Walzenmantel 12 übertragen zu können, kann es erforderlich werden, die Querbelastbarkeit der Verbindung zwischen der Abdeckung 13 und dem Walzenmantel 12 zu erhöhen.

Dies wird gemäß Fig. 1 dadurch erreicht, daß verteilt an den Verbindungsflächen 3, 4 des Walzenmantels 12 sowie der Abdeckung 13, vorzugsweise zwischen den Schraubverbindungen, Aussparungen 5 und 6 angeordnet werden, die die Form eines senkrecht zur Verbindungsfläche 3, 4 angeordneten Konusses haben, dessen Querschnittsfläche sich zur Verbindungsfläche 3, 4 hin vergrößert. Dabei befindet sich eine Aussparung 5 der Abdeckung 13 jeweils grob positioniert gegenüber einer Aussparung 6 des Walzenmantels 12.

Bevor die Abdeckung 13 mit Hilfe der Schrauben 17 am Walzenmantel 12 befestigt wird, können die gegenüberliegenden Aussparungen 5, 6 gemäß Anspruch 1 jeweils mit einer anderen von zwei zähflüssigen oder pastenförmigen Komponenten eines bei Vermischung derselben infolge des Verbindens der Teile 1, 2 aushärtbaren Materials 9, insbesondere Kunststoffs, gefüllt werden. Die Zeit für die Aushärtung hängt neben der Fließfähigkeit der Komponenten auch von der Art des Materials 9 ab.

Entsprechend Anspruch 2 besteht aber auch die Möglichkeit, die Aussparungen 5, 6 mit einem zähflüssigen oder pastenförmigen sowie aushärtbaren Material 9 gefüllt werden. Dies empfiehlt sich insbesondere dann, wenn die Zeitdauer des Aushärtungsprozesses dies zuläßt. Wegen der Fließfähigkeit des Materials 9 kommt es nach dem Verbinden der Teile 1, 2 auch zur Vereinigung der beiden Materialmassen der Aussparungen 5, 6. Im Anschluß daran kann nunmehr eine Beeinflussung des Aushärtungsprozesses des Materials 9 von außen stattfinden. Vorzugsweise kann dieses hier durch eine direkte oder indirekte Erwärmung der metallischen Abdeckung 13 erfolgen.

Nach dem Aushärten des Materials 9 ist eine ausreichende Querbelastbarkeit der Verbindung gegeben. Diese Maßnahme ist nicht nur mit wenig Aufwand verbunden, sondern schont auch den Walzenmantel 12.

Um die Lösbarkeit der Verbindung zu verbessern, sollte zumindest eine der Aussparungen 5 und 6 vor dem Ausfüllen mit dem Material 9 mit einem Trennmittel beschichtet werden.

Sollte danach eine Wiedermontage erfolgen, so können die Teile aus dem Material 9 die Positionierung erleichtern.

Zur Erhöhung der Belastbarkeit des Materials 9 ist es außerdem möglich, dem Material 9 Fasern, Metallteile o.ä. beizumengen.

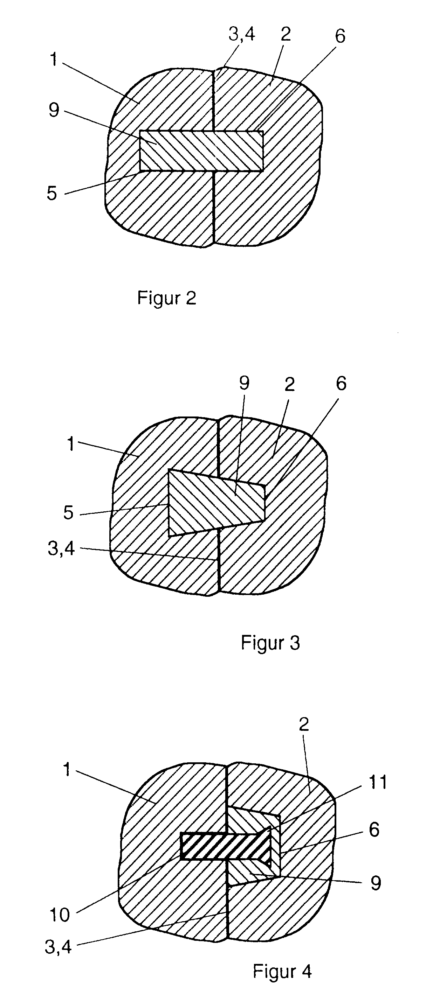

Die Fig. 2 und 3 zeigen verschiedene Gestaltungsformen der Aussparungen 5, 6, wobei auch andere Formen möglich sind. Die Aussparungen 5, 6 gemäß Fig. 2 haben die Form eines senkrecht zur Verbindungsfläche 3, 4 angeordneten Zylinders. Die Fig. 3 deutet auf die Möglichkeit hin, verschiedene Formen von Aussparungen 5, 6 zu kombinieren. In diesem Fall weisen zwar beide Aussparungen 5, 6 die Form eines senkrecht zur Verbindungsfläche 3, 4 verlaufenden Konusses auf, aber während sich die Querschnittsfläche der Aussparung 5 zur Verbindungsfläche 3 hin verkleinert, vergrößert sich die der Aussparung 6 zur Verbindungsfläche 4 hin. Dies bietet den Vorteil, daß das Teil aus dem Material 9 beim Lösen der Verbindung vom Teil 1 bzw. dessen Aussparung 5 gehalten wird und zur späteren Positionierung verwendbar ist.

In Fig. 4 ist eine Gestaltungsform entsprechend dem Verfahren gemäß Anspruch 3 dargestellt. Dabei sind an der Verbindungsfläche 3 des Teiles 1 Elemente 10 in Form von Stiften aus Metall befestigt, vorzugsweise eingeschraubt. Gegenüber diesen Stiften befinden sich Aussparungen 6. Diese Aussparungen 6 haben in diesem Beispiel die Form eines senkrecht zur Verbindungsfläche 4 verlaufenden Konusses, dessen Querschnittsfläche sich zur Verbindungsfläche 4 hin vergrößert.

Wie im vorausgegangenen Beispiel werden hier die Aussparungen 5, 6 vor dem Verbinden mit einem aushärtbaren, zähflüssigen oder pastenförmigen Material 9 oder den Komponenten davon gefüllt. Auch in diesem Fall kann nach dem Verbinden die Aushärtung über eine entsprechende Beeinflussung von außen angeregt bzw. gefördert. Um das Material 9 am Stift zu fixieren, ist es von Vorteil, wenn dieser an dem in die Aussparung 6 ragenden Ende eine Verdickung 11 aufweist. Die Füllmenge der Aussparungen 6 sollte so gewählt werden, daß es beim Einführen des Stiftes möglichst nicht zum Überlaufen kommt.

Im allgemeinen bietet sich für das Material 9 ein relativ weicher Kunststoff an, wobei allerdings andere Stoffe, bzw. deren Komponenten nicht ausgeschlossen sind.

## Patentansprüche

1. Verfahren zur Erhöhung der Querbelastbarkeit der mechanischen Verbindung zwischen einem vorwiegend aus Kunststoff bestehenden Walzenmantel (12) und einer der Verbindung zum Antrieb dienenden, aus hartem Material, vorwiegend Metall, bestehenden, seitlichen Abdeckung (13) mit sich berührenden Verbindungsflächen (3, 4), wobei die beiden Verbindungsflächen mit mindestens je einer Aussparung (5, 6) versehen werden, die sich jeweils etwa überdeckend gegenüber einer Aussparung (6, 5) in der anderen Verbindungsfläche befindet, und die beiden gegenüberliegenden Aussparungen (5, 6) vor dem Verbinden von Walzenmantel (12) und Abdeckung (13) jeweils mit einer anderen von zwei zähflüssigen oder pastenförmigen Komponenten eines bei Vermischung infolge dieses Verbindens aushärtbaren Materials gefüllt werden.

2. Verfahren zur Erhöhung der Querbelastbarkeit der mechanischen Verbindung zwischen einem vorwiegend aus Kunststoff bestehenden Walzenmantel (12) und einer der Verbindung zum Antrieb dienenden, aus hartem Material, vorwiegend Metall, bestehenden, seitlichen Abdeckung (13) mit sich berührenden Verbindungsflächen (3, 4), wobei die beiden Verbindungsflächen mit mindestens je einer Aussparung (5, 6) versehen werden, die sich jeweils etwa überdeckend gegenüber einer Aussparung (6, 5) in der anderen Verbindungsfläche befindet, und die gegenüberliegenden Aussparungen (5, 6) vor dem Verbinden von Walzenmantel (12) und Abdeckung (13) mit einem aushärtbaren, zähflüssigen oder pastenförmigen Material gefüllt werden.

3. Verfahren zur Erhöhung der Querbelastbarkeit der mechanischen Verbindung zwischen einem vorwiegend aus Kunststoff bestehenden Walzenmantel (12) und einer der Verbindung zum Antrieb dienenden, aus hartem Material, vorwiegend Metall, bestehenden, seitlichen Abdeckung (13) mit sich berührenden Verbindungsflächen (3, 4), wobei an der einen Verbindungsfläche (3) mindestens ein Element (10) befestigt wird, welches aus dieser Fläche ragt, die andere Verbindungsfläche (4) gegenüber jedem Element (10) mit einer Aussparung (6) versehen wird und jede Aussparung (6) vor dem Verbinden von Walzenmantel (12) und Abdeckung (13) mit einem zähflüssigen oder pastenförmigen Material oder den Komponenten hiervon gefüllt wird.

4. Verfahren nach Anspruch 3, dadurch gekennzeichnet, daß das mindestens eine Element (10) aus einem harten Material, vorzugsweise Metall, besteht.

5. Verfahren nach Anspruch 3 oder 4, dadurch gekennzeichnet, daß die Abdeckung (13) mit dem mindestens einen Element (10) versehen ist.

6. Verfahren nach einem der Ansprüche 3 bis 5, dadurch gekennzeichnet, daß das mindestens eine Element (10) an dem in die Aussparung (6) ragenden Ende zumindest eine Verdickung (11) aufweist.

7. Verfahren nach einem der Ansprüche 1 bis 6, dadurch gekennzeichnet, daß der Aushärtungsprozeß des Materials (9) mechanisch, thermisch, elektrisch und/oder magnetisch beeinflußt wird.

8. Verfahren nach einem der Ansprüche 1 bis 7, dadurch gekennzeichnet, daß das Material (9) bzw. dessen Komponenten Fasern, Metallteile oder ähnliche, die Belastbarkeit beeinflussende Stoffe beigemengt werden.

9. Verfahren nach einem der Ansprüche 1 bis 8, dadurch gekennzeichnet, daß die Form der Aussparungen (5, 6) der zu erwartenden Beiastungsstärke und -richtung angepaßt ist.

10. Verfahren nach einem der Ansprüche 1 bis 9, dadurch gekennzeichnet, daß zumindest jeweils eine der beiden gegenüberliegenden Aussparungen (5, 6) die Form eines im wesentlichen senkrecht zur Verbindungsfläche (3, 4) angeordneten Zylinders hat.

11. Verfahren nach einem der Ansprüche 1 bis 10, dadurch gekennzeichnet, daß zumindest jeweils eine der beiden gegenüberliegenden Aussparungen (5, 6) die Form eines im wesentlichen senkrecht zur Verbindungsfläche (3, 4) angeordneten Konusses hat, dessen Querschnittsfläche sich zur Verbindungsfläche (3, 4) hin vergrößert.

12. Verfahren nach einem der Ansprüche 1 bis 11, dadurch gekennzeichnet, daß sich zumindest bei jeweils einem der beiden gegenüberliegenden Aussparungen (5, 6) die Querschnittsfläche zur Verbindungsfläche (3, 4) hin verkleinert.

13. Verfahren nach einem der Ansprüche 1 bis 12, dadurch gekennzeichnet, daß mindestens eine der Aussparungen (5, 6) vor dem Auffüllen mit dem Material (9) bzw. dessen Komponenten mit einem Trennmittel benetzt wird.

## Claims

1. Method of increasing the transverse load carrying capacity of the mechanical connection between a roller casing (12) made mainly of plastic and a side cover (13) serving for connection to the drive and made of hard material, mainly metal, with contacting connecting surfaces (3, 4), wherein the two connecting surfaces are each provided with at least one recess (5, 6) which is in each case located approximately in overlapping relationship relative to a recess (6, 5) in the other connecting surface, and the two opposed recesses (5, 6) before connection of roller casing (12) and cover (13) are in each case filled with another of two viscous or pasty components of a material capable of hardening on mixing as a result of this connection.

2. Method of increasing the transverse load carrying capacity of the mechanical connection between a roller casing (12) made mainly of plastic and a side cover (13) serving for connection to the drive and made of hard material, mainly metal, with contacting connecting surfaces (3, 4), wherein the two connecting surfaces are each provided with at least one recess (5, 6) which is in each case located approximately in overlapping relationship relative to a recess (6, 5) in the other connecting surface, and the two opposed recesses (5, 6) before connection of roller casing (12) and cover (13) are filled with a hardenable, viscous or pasty material.

3. Method of increasing the transverse load carrying capacity of the mechanical connection between a roller casing (12) made mainly of plastic and a side cover (13) serving for connection to the drive and made of hard material, mainly metal, with contacting connecting surfaces (3, 4), wherein attached to one connecting surface (3) is at least one element (10) which protrudes from this surface, the other connecting surface (4) opposite each element (10) is provided with a recess (6) and each recess (6) before connection of roller casing (12) and cover (13) is filled with a viscous or pasty material or the components thereof.

4. Method according to claim 3, characterised in that the at least one element (10) is made of a hard material, preferably metal.

5. Method according to claim 3 or 4, characterised in that the cover (13) is provided with the at least one element (10).

6. Method according to any of claims 3 to 5, characterised in that the at least one element (10) at the end protruding into the recess (6) comprises at least one thickened portion (11).

7. Method according to any of claims 1 to 6, characterised in that the process of hardening the material (9) is controlled mechanically, thermally, electrically and/or magnetically.

8. Method according to any of claims 1 to 7, characterised in that to the material (9) or the components thereof are added fibres, metal parts or the like materials which affect the load carrying capacity.

9. Method according to any of claims 1 to 8, characterised in that the shape of the recesses (5, 6) is adapted to the loading strength and direction to be expected.

10. Method according to any of claims 1 to 9, characterised in that at least one of the two opposed recesses (5, 6) has the shape of a cylinder arranged essentially perpendicularly to the connecting surface (3, 4).

11. Method according to any of claims 1 to 10, characterised in that at least one of the two opposed recesses (5, 6) has the shape of a cone which is arranged essentially perpendicularly to the connecting surface (3, 4) and of which the cross-sectional area increases towards the connecting surface (3, 4).

12. Method according to any of claims 1 to 11, characterised in that in the case of at least one of the two opposed recesses (5, 6) the cross-sectional area decreases towards the connecting surface (3, 4).

13. Method according to any of claims 1 to 12, characterised in that at least one of the recesses (5, 6) before filling with the material (9) or the components thereof is wetted with a release agent.

## Revendications

1. Procédé pour augmenter la résistance au cisaillement de l'assemblage entre un bandage de cylindre (12), fait essentiellement en matière plastique, et un recouvrement latéral (13), qui sert à l'entraînement de l'assemblage et qui est fait en un matériau dur, principalement du métal, comportant des surfaces d'assemblage (3, 4) qui se touchent, où les deux surfaces d'assemblage sont pourvues à chaque fois d'au moins un évidement (5, 6), qui se trouve à chaque fois, de façon à sensiblement se superposer, en face d'un évidement (6, 5) dans l'autre surface d'assemblage, et où les deux évidements (5, 6) qui se font face sont remplis, avant d'assembler le bandage de cylindre (12) et le recouvrement (13), à chaque fois d'un autre de deux constituants visqueux ou pâteux d'une matière durcissable lors du mélange suite à cet assemblage.

2. Procédé pour augmenter la résistance au cisaillement de l'assemblage entre un bandage de cylindre (12), fait essentiellement en matière plastique, et un recouvrement latéral (13), qui sert à l'entraînement de l'assemblage et qui est fait en un matériau dur, principalement du métal, comportant des surfaces d'assemblage (3, 4) qui se touchent, où les deux surfaces d'assemblage sont pourvues à chaque fois d'au moins un évidement (5, 6), qui se trouve à chaque fois, de façon à sensiblement se superposer, en face d'un évidement (6, 5) dans l'autre surface d'assemblage, et où les évidements (5, 6) qui se font face sont remplis, avant d'assembler le bandage de cylindre (12) et le recouvrement (13), avec une matière durcissable visqueuse ou pâteuse.

3. Procédé pour augmenter la résistance au cisaillement de l'assemblage entre un bandage de cylindre (12), fait essentiellement en matière plastique, et un recouvrement latéral (13), qui sert à l'entraînement de l'assemblage et qui est fait en un matériau dur, principalement du métal, comportant des surfaces d'assemblage (3, 4) qui se touchent, où au moins un élément (10) est fixé sur l'une des surfaces d'assemblage (3) et émerge de cette surface, où l'autre surface d'assemblage (4) en face de chaque élément (10) est pourvue d'un évidement (6), et où chaque évidement (6) est rempli, avant d'assembler le bandage de cylindre (12) et le recouvrement (13), d'une matière visqueuse ou pâteuse ou de ses constituants.

4. Procédé selon la revendication 3, caractérisé en ce que l'élément (10), qui est d'un au moins, est fait en un matériau dur, de préférence du métal.

5. Procédé selon la revendication 3 ou 4, caractérisé en ce que le recouvrement (13) est pourvu de l'élément (10), qui est d'un au moins.

6. Procédé selon l'une des revendications 3 à 5, caractérisé en ce que l'élément (10), qui est d'un au moins, présente à l'extrémité qui rentre dans l'évidement (6) au moins un épaississement (11).

7. Procédé selon l'une des revendications 1 à 6, caractérisé en ce que le processus de durcissement de la matière (9) est influencé mécaniquement, thermiquement, électriquement et/ou magnétiquement.

8. Procédé selon l'une des revendications 1 à 7, caractérisé en ce que des fibres, des morceaux de métal ou des matières premières similaires qui influencent la résistance mécanique, sont ajoutés à la matière (9), ou bien à ses constituants.

9. Procédé selon l'une des revendications 1 à 8, caractérisé en ce que la forme des évidements (5, 6) est adaptée à l'intensité et à la direction de sollicitation auxquelles on s'attend.

10. Procédé selon l'une des revendications 1 à 9, caractérisé en ce qu'au moins à chaque fois un des deux évidements (5, 6) qui se font face a la forme d'un cylindre disposé pour l'essentiel verticalement à la surface d'assemblage (3, 4).

11. Procédé selon l'une des revendications 1 à 10, caractérisé en ce qu'au moins à chaque fois un des deux évidements (5, 6) qui se font face a la forme d'un cône, dont la superficie de la section transversale augmente en direction de la surface d'assemblage (3, 4), disposé pour l'essentiel verticalement par rapport à la surface d'assemblage (3, 4).

12. Procédé selon l'une des revendications 1 à 11, caractérisé en ce qu'au moins pour à chaque fois l'un des deux évidements (5, 6) qui se font face, la superficie de la section transversale diminue en direction de la surface d'assemblage (3, 4).

13. Procédé selon l'une des revendications 1 à 12, caractérisé en ce qu'au moins l'un des évidements (5, 6) est mouillé avec un agent séparateur avant d'être rempli avec la matière (9) ou bien ses constituants.
